# EUROPÄISCHE PATENTSCHRIFT

(11) **EP 3 771 597 B1**
(45) Veröffentlichungstag und Bekanntmachung des Hinweises auf die Patenterteilung: **07.09.2022**
(21) Anmeldenummer: 20187827.9
(22) Anmeldetag: 27.07.2020
(51) Int. Cl.: B60R 9/06, B60R 9/10

(54) **LASTENTRÄGERADAPTER UND LASTENTRÄGER UMFASSEND EINEN SOLCHEN**
LOAD CARRIER ADAPTER AND LOAD CARRIER COMPRISING SUCH AN ADAPTER
ADAPTATEUR DE PORTE-CHARGE ET PORTE-CHARGE COMPRENANT UN TEL ADAPTATEUR DE PORTE-CHARGE

(30) Priorität: 02.08.2019 DE 202019104266 U
(43) Veröffentlichungstag der Anmeldung: 03.02.2021
(73) Patentinhaber: Keibach, Dieter, 88267 Vogt (DE)
(72) Erfinder: Keibach, Dieter, 88267 Vogt (DE)
(74) Vertreter: Maiwald Patent- und Rechtsanwaltsgesellschaft mbH

(56) Entgegenhaltungen:
- EP-A1- 0 710 588
- EP-A2- 1 211 134
- WO-A1-2009/110811

## Beschreibung

Die vorliegende Erfindung betrifft einen Lastenträgeradapter zur Befestigung an einem Kraftfahrzeug sowie einen Lastenträger, der einen solchen Lastenträgeradapter umfasst.

In der Praxis werden Lastenträger wie Fahrradträger, Gepäckboxen oder dergleichen häufig an einer fahrzeugseitigen Zugkupplung, herkömmlich auch als Anhängerkupplung bezeichnet, montiert. Bei Personenkraftwagen und leichten Nutzfahrzeugen ist zu allermeist die Zugkupplung als Kugelkopfkupplung ausgebildet. Der jeweilige Lastenträger, zum Beispiel der Fahrradträger, hat zu diesem Zweck eine Kupplungspfanne, die auf den Kugelkopf der Zugkopplung aufgesetzt und anschließend mit diesem verklemmt wird.

GB 2271093A zeigt eine horizontal und einachsig zu Auffahrzwecken schwenkbare Aufnahmeschiene für Motorräder oder Behindertenroller, deren Achsträger an einem Halter lose einsteckbar ist, wobei der Halter an eine Zugkupplung montiert werden kann. Der heckseitige Zugang zum Fahrzeug wird dabei blockiert.

Des Weiteren ist aus FR 2731395 A1 ein horizontal kippbarer Anbaukoffer bekannt, der mittels eines anhebbaren Schwenkzapfens an einem zweiarmigen und an einer Zugkupplung montierbaren Träger eingehängt werden kann.

US 7,631,791 B1 befasst sich mit einem zweiarmigen Schwenkträger, der anstatt in einer Zugkupplung in eine horizontale und im Querschnitt rechteckige Hülse am Zugfahrzeug eingesteckt werden kann.

DE 10 2017 123 890 A1 offenbart ein Trägersystem für Fahrräder, das einen fest mit dem Fahrzeug montierten Adapter umfasst, an den ein seitlich ausfahrbarer Schwenkträger befestigt werden kann. An dem Schwenkträger kann ein herkömmlicher Fahrradträger mittels einer Kugelkopfkupplung angebracht werden.

EP 1 211 134 A2 beschreibt einen Lastenträger für Fahrräder, aus der die Merkmale des Oberbegriffes des Patentanspruches 1 bekannt sind.

WO 2009/110811 A1 offenbart einen Dachträger für Fahrräder.

Bei den aus dem Stand der Technik bekannten Lastenträgern wird vielfach als Nachteil empfunden, dass sie nur mit relativ hohem Aufwand am Kraftfahrzeug montiert werden können, und dass sie im montierten Zustand oftmals keinen freien heckseitigen Zugang zum Kraftfahrzeug gewähren.

Eine Aufgabe der vorliegenden Erfindung besteht darin, einen Lastenträgeradapter und einen Lastenträger vorzusehen, welche die aus dem Stand der Technik bekannten Nachteile zumindest minimieren oder gar beseitigen, insbesondere auch einfacher am Kraftfahrzeug zu montieren sind.

Diese Aufgabe wird durch die Merkmale der unabhängigen Ansprüche 1 und 10 gelöst. Optionale bzw. bevorzugte Merkmale sind in den abhängigen Ansprüchen angegeben.

Gemäß einem ersten Aspekt der Erfindung wird ein Lastenträgeradapter zur Befestigung an einem Kraftfahrzeug bereitgestellt. Der Lastenträgeradapter umfasst ein erstes Trägerelement, das mit dem Kraftfahrzeug starr und lösbar verbindbar ist und eine Längsachse besitzt, die sich bei bestimmungsgemäßen Gebrauch senkrecht zur Längsachse des Kraftfahrzeuges erstreckt, und ein mit dem ersten Trägerelement gekoppeltes zweites Trägerelement, das translatorisch entlang der Längsachse des ersten Trägerelements verschiebbar ist, und eine Befestigungseinrichtung zur Anbringung einer Lastenaufnahme, wobei die Befestigungseinrichtung drehbeweglich zu dem ersten Trägerelement ist. Der Lastenträgeradapter ist dadurch gekennzeichnet, dass das erste Trägerelement ein Hohlkammerprofil ist, das zwei diametral gegenüberliegende Nuten aufweist, die jeweils zur Aufnahme einer Rolle einer doppelten Linearführung des zweiten Trägerelements ausgebildet sind, und dass das erste Trägerelement eine kugelförmige Ausnehmung zur Aufnahme des Kugelkopfes der Zugkupplung des Kraftfahrzeuges aufweist.

Vorzugsweise ist die Befestigungseinrichtung mittels eines Drehgelenks um eine vertikale Achse drehbeweglich zu dem ersten Trägerelement.

Ebenso ist es bevorzugt, wenn das erste Trägerelement werkzeuglos mit dem Kraftfahrzeug verbindbar ist.

Noch bevorzugter ist es, wenn das zweite Trägerelement relativ zu dem ersten Trägerelement in einem Bereich von 88° bis 92° verschwenkbar ist.

Gemäß einer weiteren bevorzugten Ausführungsform der Erfindung wird die Verschiebbarkeit des zweiten Trägerelements relativ zu dem ersten Trägerelement als auch die Drehbewegung der Befestigungseinrichtung relativ zu dem ersten Trägerelement mithilfe eines Arretierbolzens verhindert.

Ebenso ist es bevorzugt, wenn an dem ersten Trägerelement eine Arretierkupplung vorgesehen ist, mit der das erste Trägerelement mit einer Kugelkopfkupplung des Kraftfahrzeuges starr und lösbar verbindbar und verklemmbar ist.

Besonders bevorzugt weist die Arretierkupplung einen ersten Klemmbacken und einen relativ zu dem ersten Trägerelement beweglichen zweiten Klemmbacken auf, die mit Hilfe eines Klemmbügels mit der Zugkupplung des Kraftfahrzeuges verklemmbar sind.

Vorteilhaft ist es, wenn das erste Trägerelement mindestens zwei Zylinder aufweist, die konzentrisch angeordnet, einseitig offen und über radial verlaufende Stege miteinander verbunden sind, und wenn die Arretierkupplung zumindest teilweise in einem Raum zwischen den beiden Zylindern aufgenommen ist.

Ebenso ist es von Vorteil, wenn die kugelförmige Ausnehmung zur Aufnahme des Kugelkopfes der Zugkupplung des Kraftfahrzeuges von einem der Zylinder festgelegt ist.

Gemäß einem zweiten Aspekt der vorliegenden Erfindung wird ein Lastenträger bereitgestellt, der einen Lastenträgeradapter gemäß dem ersten Aspekt der Erfindung und eine Lastenaufnahme, die an der Befestigungseinrichtung befestigt ist, umfasst.

Vorzugsweise ist der Lastenträger ein Fahrradträger und die Lastenaufnahme eine Radschale.

Die Erfindung wird nun rein beispielhaft anhand der Zeichnungen beschrieben, von denen zeigen:
Fig. 1 die generelle Funktionsweise eines erfindungsgemäßen Lastenträgeradapters mit daran befestigter Radschale;
Fig. 2 eine Querschnittsansicht senkrecht zur Längsachse eines nicht zur Erfindung gehörenden Lastenträgeradapters;
Fig. 3 eine Querschnittsansicht senkrecht zur Längsachse eines Lastenträgeradapters gemäß einer bevorzugten Ausführungsform der Erfindung;
Fig. 4 eine stark vereinfachte seitliche Querschnittsansicht des in Fig. 3 gezeigten zweiten Trägerelements, welche die Aufnahme der Fahrzeuganhängerkupplung in dem zweiten Trägerelement zeigt;
Fig. 5 eine Querschnittsansicht senkrecht zur Längsachse eines Lastenträgeradapters gemäß einer weiteren bevorzugten Ausführungsform der Erfindung; und
Fig. 6 eine Unteransicht des in Fig. 5 gezeigten ersten Trägerelements.

In der folgenden detaillierten Beschreibung der Erfindung weisen gleiche Bezugszeichen auf identische oder zumindest in funktioneller Hinsicht ähnliche Bauteile hin.

Der erfindungsgemäße Lastenträgeradapter sowie der erfindungsgemäße Lastenträger sind zur Befestigung an an Kraftfahrzeugen vorgesehenen Kugelkopfkupplungen bestimmt.

Wenngleich die Erfindung in Bezug auf Fahrradträger beschrieben ist, so ist sie gleichsam auf andere Lastenträger, wie z.B. Halter für Gepäckboxen, anwendbar.

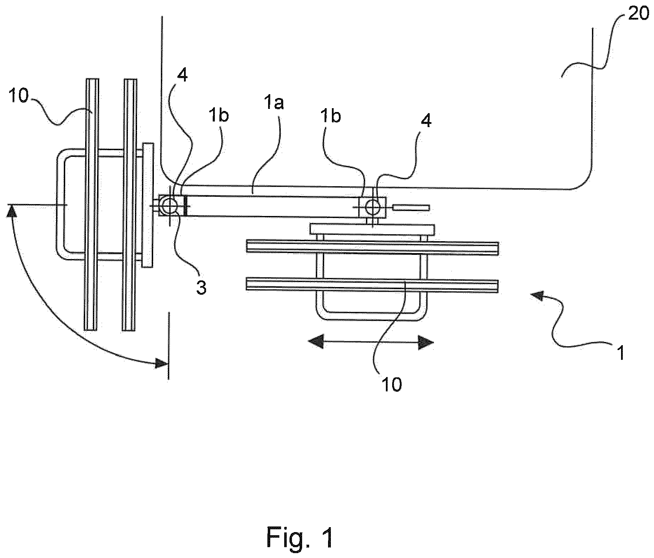

In Fig. 1 ist die generelle Funktionsweise eines Fahrradträgers gemäß der Erfindung dargestellt.

Fig. 1 zeigt eine Draufsicht auf das lediglich schematisch angedeutete Kraftfahrzeug 20 sowie auf einen Lastenträgeradapter 1 samt Radschale 10. Der Lastenträgeradapter 1 wird vorzugsweise an der Zugkupplung bzw. Kugelkopfkupplung eines Kraftfahrzeuges befestigt.

Der in Fig. 1 gezeigte Fahrradträger bzw. der zugehörige Lastenträgeradapter 1 ist von einer ersten Position (Transportposition), in der der Fahrradträger sich direkt an der Heckseite und parallel zur Querachse des Kraftfahrzeuges 20 befindet, in eine zweite Position (Be- und Entladeposition des Kraftfahrzeuges), in der der Fahrradträger sich im Wesentlichen parallel zur Längsachse des Kraftfahrzeuges erstreckt, über eine translatorische Bewegung und Drehbewegung bewegbar. Die translatorische Bewegung kann hierbei auch die Drehbewegung überlagern. Denkbar ist aber auch eine derartige Ausbildung des Lastenträgeradapters 1, dass der Fahrradträger bzw. das zweite Trägerelement 1b zunächst translatorisch in eine Endstellung verfahren werden muss, bevor der Fahrradträger über eine Drehbewegung in die in Fig. 1 gezeigte zweite Position verschwenkt werden kann.

Die Bewegungslänge des zweiten Trägerelements 1b entspricht vorzugsweise etwa einer halben Karosseriebreite des Kraftfahrzeuges. Die Endposition dieses Verfahrweges kann durch zwei Anschläge definiert werden, die vorzugsweise in einem ersten Trägerelement 1a (nicht gezeigt) vorgesehen sind. Hat das zweite Trägerelement 1b seine Endposition erreicht, wird das zweite Trägerelement 1b entriegelt und sodann samt Kugelkopf 4 und Radschale 10 um einen Winkel verschwenkt, der vorzugsweise in einem Bereich von 88° bis 92° liegt, noch bevorzugter 90° beträgt.

Diese Position gewährt einen freien Zugang zur Heckseite des Kraftfahrzeuges 20, um dieses ungehindert be- und entladen zu können.

Sodann kann das zweite Trägerelement 1b samt Radschale 10 und Kugelkopf 4 um den gleichen Drehwinkel wie zuvor zurückbewegt werden und das zweite Trägerelement 1b relativ zu dem ersten Trägerelement 1a in seine Ausgangsstellung (Transportstellung) verfahren werden.

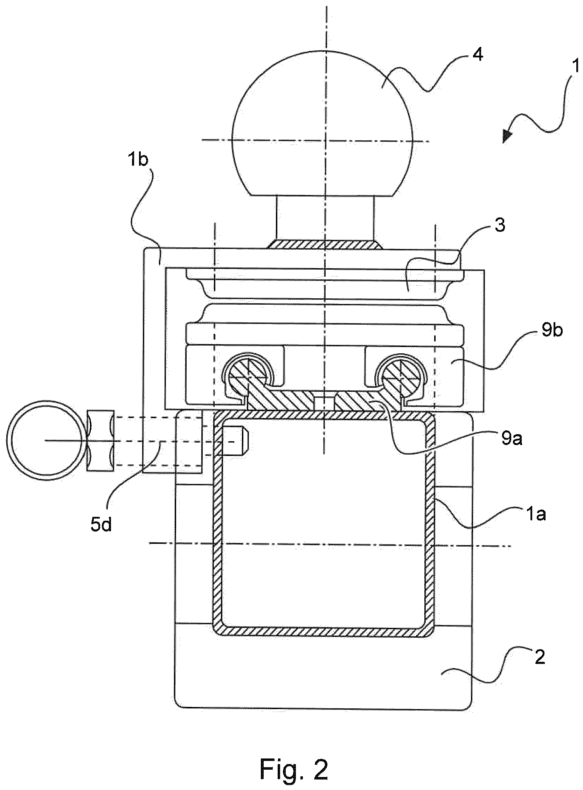

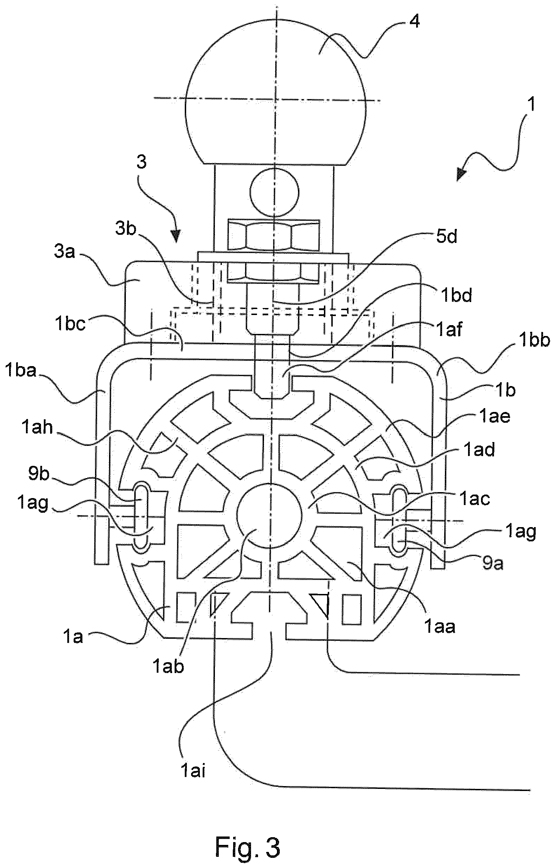

In Fig. 1 ist eine Radschale 10 gezeigt, die starr mit dem zweiten Trägerelement 1b verbunden ist, das wiederum verschiebbar und drehbar mit einem in Fig. 1 nicht gezeigten ersten Trägerelement 1a gekoppelt ist. Das zweite Trägerelement 1b ist über ein Drehgelenk 3 um eine vertikale Achse drehbeweglich mit dem ersten Trägerelement 1a verbunden. Konstruktive Details dieses Fahrradträgers können der Fig. 2, die einen nicht zur Erfindung gehörenden Fahrradträger darstellt, und der Fig. 3, die eine Ausführungsform der Erfindung darstellt, entnommen werden.

Fig. 2 zeigt eine Querschnittsansicht senkrecht zur Längsachse des Lastenträgeradapters 1. Der Lastenträgeradapter 1 umfasst ein erstes Trägerelement 1a, das vorzugsweise als Rechteckprofil ausgebildet ist. Das Rechteckprofil 1a erstreckt sich senkrecht zur Kraftfahrzeugachse, verläuft mithin also quer zu dieser. Des Weiteren umfasst der Lastenträgeradapter 1 ein zweites Trägerelement 1b, das bei dieser Ausführungsform als Winkelprofil ausgebildet ist. Um die Verschiebbarkeit bzw. relative Bewegbarkeit des zweiten Trägerelements 1b relativ zu dem ersten Trägerelement 1a zu gewährleisten, ist bei dieser Ausführungsform eine vorzugsweise doppelte Linearführung 9a, 9b vorgesehen. Die doppelte Linearführung 9a, 9b umfasst hierbei einen Führungsschlitten 9b, der an seiner Unterseite sich in Längsrichtung des Lastenträgeradapters 1 erstreckende Ausnehmungen bzw. Buchsen aufweist, in denen die Schlittenführungen des darunter befindlichen Schlittenführungsprofils 9a verlaufen. Die Buchsen des Führungsschlittens 9b können vorzugsweise mit Gleitlagern ausgerüstet sein. Eine Laufrollenführung ist in diesem Zusammenhang ebenso denkbar. Das Schlittenführungsprofil 9a ist gemäß dieser Ausführungsform fest mit dem ersten Trägerelement 1a verbunden.

Das zweite Trägerelement 1b, das bei dieser Ausführungsform als Winkelprofil ausgebildet ist, weist an der Unterseite des in der Querschnittsansicht waagerechten Schenkels ein Drehgelenk 3 auf, das hier vorzugsweise als Drehteller ausgebildet ist. Der Drehteller 3 ist einerseits fest mit dem darüber liegenden waagerechten oder horizontalen Schenkel des Winkelprofils 1b und andererseits fest mit dem Führungsschlitten 9b verbunden.

Auf der Oberseite des waagerechten Schenkels ist ein Kugelkopf 4 zur Befestigung der Radschale 10 (Fig. 1) vorgesehen. Der Kugelkopf 4 ist dabei fest mit dem zweiten Trägerelement 1b verbunden.

Des Weiteren ist ein Arretierbolzen 5d vorgesehen, der vorzugsweise federgelagert ist und sich durch ein Durchgangsloch in dem zweiten Trägerelement 1b und ein Durchgangsloch in dem ersten Trägerelement 1a erstreckt. Beide Durchgangslöcher sind fluchtend angeordnet und sind in Fig. 2 nicht gezeigt.

In der in Fig. 2 gezeigten Position des Arretierbolzens wird sowohl eine Verschiebung des zweiten Trägerelements 1b relativ zum ersten Trägerelement 1a sowie eine Drehbewegung derselben um die durch den Drehteller 3 festgelegte vertikale Drehachse verhindert. Sobald der Arretierbolzen 5d die in dem ersten und in dem zweiten Trägerelement 1a, 1b vorgesehenen Durchgangslöcher verlässt, ist die Verschiebbarkeit und Drehbewegung des zweiten Trägerelements 1b relativ zum ersten Trägerelement 1a wiederhergestellt.

Um den Lastenträgeradapter 1 vorzugsweise an einer Kugelkopfkupplung eines Kraftfahrzeuges anbringen zu können, ist eine herkömmliche Arretier- bzw. Klemmkupplung 2 vorgesehen, die (nicht gezeigt) eine Kupplungspfanne aufweist, die auf einen Kugelkopf einer an einem Kraftfahrzeug vorgesehenen Kugelkopfkupplung aufgesetzt und mittels eines nicht näher beschriebenen Hebels mit dem Kugelkopf des Kraftfahrzeuges verklemmt wird.

Fig. 3 zeigt eine bevorzugte Ausführungsform der Erfindung. Der Lastenträgeradapter 1 gemäß der Fig. 3 umfasst ein erstes Trägerelement 1a, das bei dieser Ausführungsform als Mehrkammerhohlprofil, vorzugsweise aus stranggepresstem Aluminium, hergestellt ist. Das Mehrkammerhohlprofil 1a ist im senkrechten Querschnitt kreisförmig ausgebildet und weist im Innern eine Ausnehmung laa auf, die so bemessen ist, dass der Kugelkopf der Zugkupplung des Kraftfahrzeuges mit geringem Spiel darin aufnehmbar ist. Im senkrechten Querschnitt weist das Mehrkammerhohlprofil 1a konzentrische Ringe 1ac, 1ad, 1ae auf, die über sternförmig verlaufende Stege 1ah, ausgehend vom Zentrum des Mehrkammerhohlprofils 1a, miteinander verbunden sind.

Die in Fig. 3 gezeigten Ringe stellen in Wirklichkeit drei einseitig nach unten offene, konzentrische Zylinder 1ac, 1ad und 1ae dar, die mittels mehrerer, radial verlaufender Stege 1ah miteinander verbunden sind.

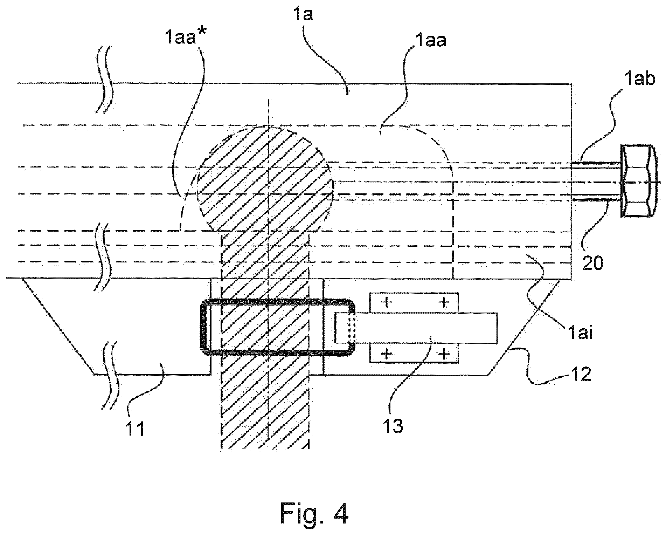

Das das Zentrum des Mehrkammerhohlprofils 1a umfassende zentrale Durchgangsloch 1ab dient zur Aufnahme einer Gewindebuchse mit Befestigungsschraube 20 (Fig. 4) zur Verklemmung des Kugelkopfes der Zugkupplung des Kraftfahrzeuges innerhalb der Ausnehmung laa des Mehrkammerhohlprofils 1a. Dies wird weiter unten mit Bezug auf die Fig. 4 erläutert.

In der senkrechten Querschnittsansicht der Fig. 3 ist zu sehen, dass bei 3 Uhr und 9 Uhr zwei nutenförmige und nach außen hin offene Aussparungen lag vorgesehen sind, die so ausgestaltet sind, dass in jeder Aussparung lag jeweils eine Rolle einer rollengeführten Linearführung 9a, 9b aufnehmbar ist. Die bei 12 Uhr vorgesehene Öffnung 1af dient zur Aufnahme eines weiter unten erklärten Arretierbolzens 5d. Bei 6 Uhr ist eine weitere Ausnehmung 1ai vorgesehen, in die Klemmbacken 11, 12 beweglich eingeführt werden können, mittels derer das erste Trägerelement 1a mit der Zugkupplung des Kraftfahrzeuges verklemmt werden kann. Zur Verklemmung dient ein Klemmbügel 13, der vorzugsweise als Kistenverriegelung ausgebildet ist. Zum Verklemmen des ersten Trägerelements 1a mit der Zugkupplung des Kraftfahrzeuges werden nun die beiden Klemmbacken 11, 12 an gegenüberliegenden Seiten der Zugkupplung angeordnet. Sodann wird der Klemmbügel 13 verschwenkt, wodurch der Abstand zwischen den beiden Klemmbacken 11, 12 verringert wird.

Gemäß der Ausführungsform der Fig. 3 ist ein zweites Trägerelement 1b vorgesehen, das vorzugsweise als U-Profil ausgebildet ist. Das Mehrkammerhohlprofil 1a ist zumindest abschnittsweise im Innern des U-Profils 1b angeordnet. Das U-Profil 1b weist an den senkrechten Schenkeln 1ba, 1bb jeweils eine daran befestigte Laufrolle 9a, 9b auf, die innerhalb der Aussparungen lag aufgenommen ist. Die in den Aussparungen lag verlaufenden Rollen 9a, 9b bilden dabei eine doppelte Linearführung. Am waagerechten Schenkel 1bc des U-Profils 1b ist ebenso ein Durchgangsloch 1bd vorgesehen, durch das der Arretierbolzen 5d hindurch verläuft.

Fest mit dem zweiten Trägerelement 1b verbunden ist eine Drehbuchse 3a, die zusammen mit einem darin drehbeweglich gelagerten Drehteller 3b ein buchsengelagertes Drehgelenk 3 bildet. Fest mit dem Drehteller 3b verbunden ist eine Befestigungseinrichtung 4, die hier vorzugsweise als Kugelkopf ausgebildet ist.

Der Arretierbolzen 5d, der in Längsrichtung der beiden Trägerelemente 1a, 1b versetzt von der Befestigungseinrichtung 4 angeordnet ist, verläuft durch die Öffnung 1bd in dem zweiten Trägerelement 1b und durch die Öffnung 1af in dem Mehrkammerhohlprofil 1a. Um das zweite Trägerelement 1b relativ zum ersten Trägerelement 1a verschieben zu können, muss der vorzugsweise federgelagerte Arretierbolzen 5d nach oben aus der Öffnung 1af bewegt werden. Sobald der Arretierbolzen 5d die Öffnung 1af verlassen hat, ist die Verschiebbarkeit gewährt. Gleichzeitig ist eine Verdrehsicherung gegeben, die verhindert, dass die Befestigungseinrichtung 4 sich relativ zu dem ersten Trägerelement 1a dreht, da die Befestigungseinrichtung 4 nach wie vor mit dem zweiten Trägerelement 1b arretiert ist.

In der in Fig. 3 dargestellten Querschnittsansicht ist zu sehen, wie der Kugelkopf der Zugkupplung des Kraftfahrzeuges in der Ausnehmung laa aufgenommen ist. Wie in der Fig. 4 dargestellt ist, wird der Kugelkopf der Zugkupplung des Kraftfahrzeuges durch die Klemmschraube 10 in der Ausnehmung laa verklemmt. Die Ausnehmung laa weist einen Durchmesser senkrecht zur Längserstreckung des ersten Trägerelements 1a auf, der geringfügig größer als der Kugelkopf der Zugkupplung ist. In Längsrichtung des ersten Trägerelement kann die Ausnehmung im Querschnitt vorzugsweise ellipsoid sein. Endseitig kann sie alternativ einen Krümmungsradius aufweisen, der größer als der Durchmesser des Kugelkopfes der Zugkupplung ist. Die Tiefe der Ausnehmung laa in vertikaler Richtung ist so bemessen, dass der Mittelpunkt der Öffnung 1ai oberhalb der Äquatorlinie des Kugelkopfes der Zugkupplung liegt. Die Klemmschraube 10, welche durch die zentrale Öffnung 1ab des Mehrkammerprofils 1a verläuft (Fig. 3), tritt so exzentrisch in Kontakt mit dem Kugelkopf der Zugkupplung, und zwar oberhalb der Äquatorlinie desselben. Mit zunehmendem Anziehmoment der Klemmschraube 10 wird der Kugelkopf der Zugkupplung nicht nur gegen den elliptischen endseitigen Abschnitt 1aa^{∗} (oder Abschnitt 1aa^{∗} mit großem Durchmesser) gedrückt und mit diesem kraftschlüssig verbunden und so in axialer Richtung des ersten Trägerelements 1a verklemmt. Es wird vielmehr auch der Kugelkopf der Zugkupplung nach unten gedrückt und in Anlage mit dem Mehrkammerprofil 1a gebracht, vorzugsweise mit einem waagerecht verlaufenden Steg oberhalb der Öffnung 1ai. Auf diese Weise tritt auch eine Verklemmung in vertikaler Richtung auf.

Vorteilhaft bei dieser Ausführungsform ist, dass etwaige Hebelkräfte auf den Kugelkopf der Zugkupplung des Kraftfahrzeuges minimiert sowie etwaige Torsionskräfte, die vom Gewicht der auf der Radschale 10 befindlichen Fahrräder auf das erste und das zweite Trägerelement 1a, 1b ausgeübt werden, ebenso weitestgehend unterbunden werden. Aufgrund der Minimierung dieser Torsions- wie auch Hebelkräfte können etwaige Materialstärken, die ansonsten an dem ersten und zweiten Trägerelement 1a, 1b vorhanden sein müssten, verringert werden.

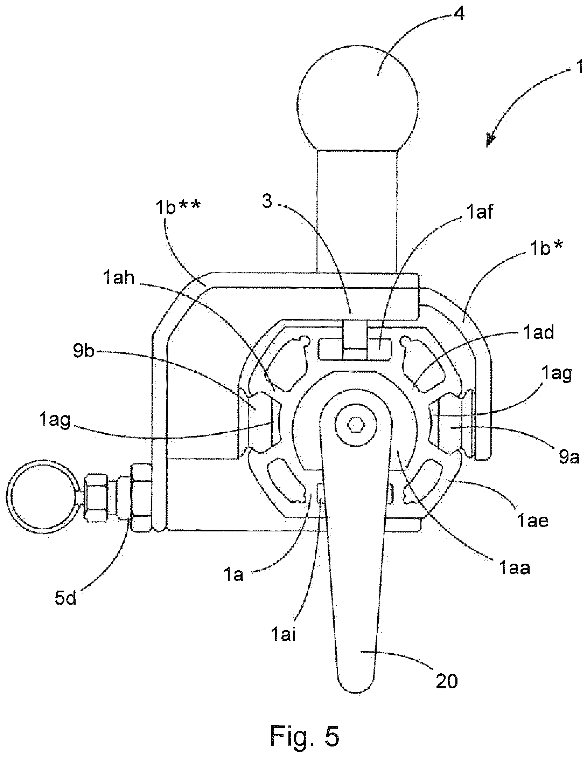

Fig. 5 zeigt eine weitere Ausführungsform der Erfindung, die gegenüber der in Fig. 3 gezeigten Ausführungsform geringfügig modifiziert ist.

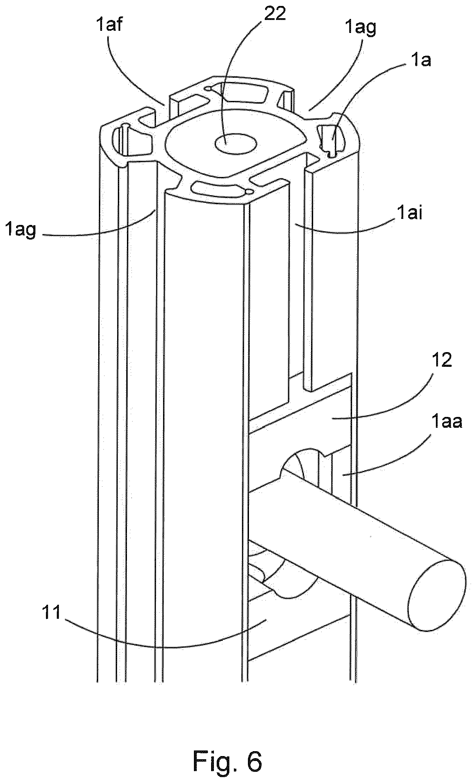

Das erste Trägerelement 1a ist auch bei dieser Ausführungsform als Mehrkammerhohlprofil, vorzugsweise aus stranggepresstem Aluminium, gebildet. Das Mehrkammerhohlprofil 1a ist jedoch im Vergleich zu dem in Fig. 3 gezeigten Mehrkammerhohlprofil leicht vereinfacht ausgeführt, was zu einer Kostenersparnis bei der Herstellung führt. Das Mehrkammerhohlprofil 1a weist bei 3 Uhr, 6 Uhr, 9 Uhr und 12 Uhr nutenförmige Ausnehmungen 1af, lag und 1ai auf (siehe auch Fig. 6).

Das zweite Trägerelement 1b umfasst bei dieser Ausführungsform einen ersten Abschnitt 1b^{∗} und einen zweiten Abschnitt 1b^{∗∗}. Der erste Abschnitt 1b^{∗} ist U-förmig ausgebildet, umschließt zumindest teilweise das erste Trägerelement 1a und ist über eine doppelte Linearführung 9a, 9b translatorisch mit dem ersten Trägerelement 1a gekoppelt. Der zweite Abschnitt 1b^{∗∗} ist drehbeweglich mittels eines Drehgelenks 3 (in Fig. 5 nicht zu sehen), zum Beispiel mittels eines Drehtellers oder eines buchsengelagerten Drehgelenks, mit dem translatorisch beweglichen Abschnitt 1b^{∗} gekoppelt. Ein Kugelkopf 4 ist starr mit dem zweiten Abschnitt 1b^{∗∗} verbunden.

Wie bei den vorherigen Ausführungsformen dient der Kugelkopf 4 vorzugsweise zur lösbaren Befestigung einer Radschale 10 (hier nicht gezeigt). Im Unterschied zu der in Fig. 3 gezeigten Ausführungsform befindet sich der Arretierbolzen 5d im Eingriff mit einem Teilabschnitt des zweiten Abschnittes 1b^{∗∗}, der drehbeweglich relativ zu dem ersten Abschnitt 1b^{∗} und drehbeweglich relativ zu dem ersten Trägerelement 1a ist. Des Weiteren befindet sich der Arretierbolzen 5d in der arretierten Stellung direkt oder indirekt mittels eines an dem Trägerelement 1a angeordneten Arretierklotzes im Eingriff mit dem Trägerelement 1a. Der Arretierbolzen 5d in der arretierten Stellung verhindert einerseits eine translatorische Bewegung des ersten Abschnitts 1b^{∗} des zweiten Trägerelements 1b relativ zu dem ersten Trägerelement 1a, und andererseits eine Drehbewegung des zweiten Abschnitts 1b^{∗∗} des zweiten Trägerelements 1b relativ zu dem ersten Trägerelement 1a.

In der montierten Stellung des Lastenträgeradapters 1 an einer Kugelkopfkopplung eines Kraftfahrzeuges wird der Arretierbolzen 5d in Längsrichtung des Kraftfahrzeuges verschoben und so der Eingriff des Arretierbolzens 5d mit dem Teilabschnitt des zweiten Abschnittes 1b^{∗∗} und dem ersten Trägerelement 1a gelöst.

Um das erste Trägerelement 1a mit der Kugelkopfkopplung des Kraftfahrzeuges zu koppeln, ist eine Befestigungsschraube 20, die bei dieser Ausführungsform bevorzugt als Knebelschraube ausgebildet ist, vorgesehen.

Bezug nehmend auf die Fig. 6 wird die Knebelschraube 20 durch ein Gewindeloch 22 an der Stirnseite des ersten Trägerelements 1a hindurchgeführt. Beim Anziehen der Knebelschraube 20 wird eine beweglich gelagerte Backe 12 in Richtung Kugelkopf oder Schaft des Kugelkopfes des Kraftfahrzeuges bewegt. Folglich wird der Kugelkopf oder der Schaft des Kugelkopfes zwischen der beweglichen Backe 12 und der stationären Backe 11 fest geklemmt.

## Patentansprüche

1. Lastenträgeradapter (1) zur Befestigung an einem Kraftfahrzeug, umfassend ein erstes Trägerelement (1a), das mit dem Kraftfahrzeug starr und lösbar verbindbar ist und eine Längsachse besitzt, die sich bei bestimmungsgemäßen Gebrauch senkrecht zur Längsachse des Kraftfahrzeuges erstreckt, und ein mit dem ersten Trägerelement (1a) gekoppeltes zweites Trägerelement (1b), das translatorisch entlang der Längsachse des ersten Trägerelements (1a) verschiebbar ist, und eine Befestigungseinrichtung (4) zur Anbringung einer Lastenaufnahme (10), wobei die Befestigungseinrichtung (4) drehbeweglich zu dem ersten Trägerelement (1a) ist,
**dadurch gekennzeichnet, dass** das erste Trägerelement (1a) ein Hohlkammerprofil ist, das zwei diametral gegenüberliegende Nuten (1ag) aufweist, die jeweils zur Aufnahme einer Rolle (9a, 9b) einer doppelten Linearführung des zweiten Trägerelements (1b) ausgebildet sind, und dass das erste Trägerelement (1a) eine kugelförmige Ausnehmung (laa) zur Aufnahme des Kugelkopfes einer Zugkupplung des Kraftfahrzeuges aufweist.

2. Lastenträgeradapter (1) nach Anspruch 1, wobei die Befestigungseinrichtung (4) mittels eines Drehgelenks (3) um eine vertikale Achse drehbeweglich zu dem ersten Trägerelement (1a) ist.

3. Lastenträgeradapter (1) nach einem der vorhergehenden Ansprüche, wobei das erste Trägerelement (1a) werkzeuglos oder werkzeuggebunden mit dem Kraftfahrzeug verbindbar ist.

4. Lastenträgeradapter (1) nach einem der vorhergehenden Ansprüche, wobei das zweite Trägerelement (1b) relativ zu dem ersten Trägerelement (1a) in einem Bereich von 88° bis 92° verschwenkbar ist.

5. Lastenträgeradapter (1) nach einem der vorhergehenden Ansprüche, wobei die Verschiebbarkeit des zweiten Trägerelements (1b) relativ zu dem ersten Trägerelement (1a) als auch die Drehbewegung der Befestigungseinrichtung (4) relativ zu dem ersten Trägerelement (1a) mit Hilfe eines Arretierbolzens (5d) verhindert wird.

6. Lastenträgeradapter (1) nach einem der vorhergehenden Ansprüche, wobei an dem ersten Trägerelement (1a) eine Arretierkupplung (2, 11, 12, 13) vorgesehen ist, mit der das erste Trägerelement (1a) mit dem Kugelkopf der Zugkupplung des Kraftfahrzeuges starr und lösbar verbindbar und verklemmbar ist.

7. Lastenträgeradapter (1) nach Anspruch 6, wobei die Arretierkupplung (2) einen ersten Klemmbacken (11) und einen relativ zu dem ersten Trägerelement (1a) beweglichen zweiten Klemmbacken (12) aufweist, die mit Hilfe eines Klemmbügels oder Knebelschraube (20) mit dem Kugelkopf der Zugkupplung des Kraftfahrzeuges verklemmbar sind.

8. Lastenträgeradapter nach Anspruch 7, wobei das erste Trägerelement (1a) mindestens zwei Zylinder (lac, 1ad, 1ae) aufweist, die konzentrisch angeordnet, einseitig offen und über radial verlaufende Stege (1ah) miteinander verbunden sind, und wobei die Arretierkupplung (11, 12, 13) zumindest teilweise in einem Raum (1ai) zwischen den beiden Zylindern (lad, 1ae) aufgenommen ist.

9. Lastenträgeradapter nach Anspruch 1 und 8, wobei die kugelförmige Ausnehmung (laa) zur Aufnahme des Kugelkopfes der Zugkupplung des Kraftfahrzeuges von einem der Zylinder (lad, 1ae) festgelegt ist.

10. Lastenträger mit einem Lastenträgeradapter (1) nach einem der Ansprüche 1 bis 9 und einer Lastenaufnahme (10), die an der Befestigungseinrichtung (4) befestigt ist.

11. Lastenträger nach Anspruch 10, wobei der Lastenträger ein Fahrradträger ist und die Lastenaufnahme eine Radschale (10) ist.

## Claims

1. A load carrier adapter (1) for fastening to a motor vehicle, comprising a first carrier element (1a), which can be connected to the motor vehicle in a rigid and detachable manner and has a longitudinal axis which, when used as intended, extends perpendicularly to the longitudinal axis of the motor vehicle, and a second carrier element (1b) coupled to the first carrier element (1a), which can be displaced in a translational manner along the longitudinal axis of the first carrier element (1a), and a fastening device (4) for attaching a load mount (10), it being possible to rotate the fastening device (4) with respect to the first carrier element (1a),
**characterized in that** the first carrier element (1a) is a hollow chamber profile, which has two diametrically opposite grooves (1ag), which are in each case designed to accommodate a roller (9a, 9b) of a double linear guide of the second carrier element (1b), and **in that** the first carrier element (1a) has a spherical recess (laa) to accommodate the ball head of a tow coupling of the motor vehicle.

2. The load carrier adapter (1) according to Claim 1, wherein the fastening device (4) can be rotated by means of a rotary joint (3) about a vertical axis with respect to the first carrier element (1a).

3. The load carrier adapter (1) according to one of the preceding claims, wherein the first carrier element (1a) can be connected to the motor vehicle in a tool-free or tool-dependent manner.

4. The load carrier adapter (1) according to one of the preceding claims, wherein the second carrier element (1b) can be pivoted in a range of 88° to 92° relative to the first carrier element (1a).

5. The load carrier adapter (1) according to one of the preceding claims, wherein the displaceability of the second carrier element (1b) relative to the first carrier element (1a) as well as the rotational movement of the fastening device (4) relative to the first carrier element (1a) is prevented with the aid of a locking bolt (5d).

6. The load carrier adapter (1) according to one of the preceding claims, wherein a locking coupling (2, 11, 12, 13) is provided on the first carrier element (1a), using which the first carrier element (1a) can be connected and clamped to the ball head of the tow coupling of the motor vehicle in a rigid and detachable manner.

7. The load carrier adapter (1) according to Claim 6, wherein the locking coupling (2) has a first clamping jaw (11) and a second clamping jaw (12), which can be moved relative to the first carrier element (1a), which jaws can be clamped to the ball head of the tow coupling of the motor vehicle with the aid of a clamping bracket or thumbscrew (20).

8. The load carrier adapter according to Claim 7, wherein the first carrier element (1a) has at least two cylinders (lac, 1ad, 1ae), which are arranged concentrically, open on one side and connected to one another by means of radially running webs (1ah), and wherein the locking coupling (11, 12, 13) is accommodated at least to some extent in a space (1ai) between the two cylinders (lad, 1ae).

9. The load carrier adapter according to Claims 1 and 8, wherein the spherical recess (laa) for accommodating the ball head of the tow coupling of the motor vehicle is defined by one of the cylinders (lad, 1ae).

10. A load carrier having a load carrier adapter (1) according to one of Claims 1 to 9 and a load mount (10), which is fastened to the fastening device (4).

11. The load carrier according to Claim 10, wherein the load carrier is a bicycle carrier and the load mount is a wheel tray (10).

## Revendications

1. Adaptateur (1) de porte-charges, destiné à être fixé sur un véhicule automobile, comprenant un premier élément porteur (1a), qui est susceptible d'être relié de manière rigide et amovible avec le véhicule automobile et qui possède un axe longitudinal, qui lors d'une utilisation selon les règles de l'art, s'étend à la perpendiculaire de l'axe longitudinal du véhicule automobile, et un deuxième élément porteur (1b), accouplé avec le premier élément porteur (1a), qui est déplaçable en translation le long de l'axe longitudinal du premier élément porteur (1a), et un dispositif de fixation (4), destiné au montage d'un dispositif de réception de charges (10), le dispositif de fixation (4) étant mobile en rotation par rapport au premier élément porteur (1a),
**caractérisé en ce que** le premier élément porteur (1a) est un profilé à chambre creuse, qui comporte deux rainures (1ag) diamétralement opposées, qui sont conçues chacune pour réceptionner un galet (9a, 9b) d'un double guidage linéaire du deuxième élément porteur (1b), et **en ce que** le premier élément porteur (1a) comporte un évidement (laa) de forme sphérique, pour réceptionner la tête sphérique d'un attelage de traction du véhicule automobile.

2. Adaptateur (1) de porte-charges selon la revendication 1, à l'aide d'une articulation rotative (3), le dispositif de fixation (4) étant mobile en rotation autour d'un axe vertical par rapport au premier élément porteur (1a).

3. Adaptateur (1) de porte-charges selon l'une quelconque des revendications précédentes, le premier élément porteur (1a) étant susceptible d'être relié au véhicule automobile sans outillage ou avec outillage.

4. Adaptateur (1) de porte-charges selon l'une quelconque des revendications précédentes, le deuxième élément porteur (1b) étant susceptible de pivoter par rapport au premier élément porteur (1a) dans un ordre de 88° à 92°.

5. Adaptateur (1) de porte-charges selon l'une quelconque des revendications précédentes, l'aptitude au déplacement du deuxième élément porteur (1b) par rapport au premier élément porteur (1a), tout comme le mouvement en rotation du dispositif de fixation (4) par rapport au premier élément porteur (1a) étant empêchés à l'aide d'un boulon de blocage (5d).

6. Adaptateur (1) de porte-charges selon l'une quelconque des revendications précédentes, sur le premier élément porteur (1a) étant prévu un accouplement de blocage (2, 11, 12, 13), à l'aide duquel le premier élément porteur (1a) est susceptible d'être relié de manière rigide et amovible et d'être serré avec la tête sphérique de l'attelage de traction du véhicule automobile.

7. Adaptateur (1) de porte-charges selon la revendication 6, l'accouplement de blocage (2) comportant une première mâchoire de serrage (11) et une deuxième mâchoire de serrage (12), mobile par rapport au premier élément porteur (1a), qui à l'aide d'un étrier de serrage ou d'une vis à garrot (20) est susceptible d'être serrée avec la tête sphérique de l'attelage de traction du véhicule automobile.

8. Adaptateur de porte-charges selon la revendication 7, le premier élément porteur (1a) comportant au moins deux cylindres (1ac, 1ad, 1ae), qui sont placés de manière concentrique, ouverts sur un côté et reliés les uns aux autres par l'intermédiaire de barrettes (1ah) s'écoulant en direction radiale, et l'accouplement de blocage (11, 12, 13) étant logé au moins en partie dans un espace (1ai) entre les deux cylindres (lad, 1ae).

9. Adaptateur de porte-charges selon la revendication 1 et 8, pour recevoir la tête sphérique de l'attelage de traction du véhicule automobile, l'évidement (laa) de forme sphérique étant immobilisé par l'un des cylindres (1ad, 1ae).

10. Porte-charges, pourvu d'un adaptateur (1) de porte-charges selon l'une quelconque des revendications 1 à 9 et d'un dispositif de réception de charges (10), qui est fixé sur le dispositif de fixation (4).

11. Porte-charges selon la revendication 10, le porte-charges étant un porte-vélos et le dispositif de réception de charges étant une coque de roue (10).
